# EUROPEAN PATENT SPECIFICATION

(11) **EP 0 294 909 B1**
(45) Date of publication and mention of the grant of the patent: **25.08.1993**
(21) Application number: 88201205.7
(22) Date of filing: 10.06.1988
(51) Int. Cl.: A01K 1/00, F24F 7/10

(54) **Ceiling for livestock sheds or the like**
Decke für Viehställe oder dgl.
Plafond pour bâtiment d'élevage ou similaire

(30) Priority: 12.06.1987 NL 8701381
(43) Date of publication of application: 14.12.1988
(73) Proprietor: AGRICULTURAL ENGINEERING MANUFACTURING HOLDING B.V., NL-5993 NN Maasbree (NL)
(72) Inventor: Aerts, Hubertus Maria, NL-5993 PJ Maasbree (NL)
(74) Representative: Hoorweg, Petrus Nicolaas

(56) References cited:
- DE-A- 3 413 582
- FR-A- 2 515 319
- NL-A- 8 502 079
- US-A- 2 988 980
- US-A- 3 196 773
- US-A- 3 255 687

## Description

The invention relates to a ceiling for livestock sheds and the like, comprising a porous layer as a division between an air supply space and the shed area to bring about climate control by means of air ventilation, said porous layer being supported by a supporting structure comprising a plate with a wave-like cross section perforated about its lower portion, the porous layer being in contact with the upper portions of said plate forming air chambers.

Such a ceiling is known from US-A-2 988 980.

According to one embodiment of said specification, the perforations have been provided in the lower parts of the plate, so that air flowing through said perforations has only a vertical direction.

According to another embodiment of this prior art specification the perforations have been provided in the oblique parts of said plate. However below this plate a second perforated plate has been provided. Consequently also according to this embodiment the air enters the stable area only in a vertical direction.

The object of the invention is to improve the mixing with the air present in the shed with the fresh air. Tho this end the invention provided a ceiling which is distinguished in that the perforated plate comprises upper and lower straight horizontal portions, and intermediate straight portions linking said upper and lower horizontal portions, and that perforations are provided in the intermediate portions and in the upper horizontal portions of the plate.

From FR-A-2 515 319 a ceiling is known, comprising a horizontal plate with perforations, and which suffers from the same disadvantages as US-A-2 988 980.

The invention is further elucidated in the figure description of a number of embodiments hereinbelow. In the drawing:
Fig. 1 shows an upright section through a livestock shed provided with a porous layer as ceiling,
Fig. 2 is a perspective top view of a portion of the ceiling according to the invention,
Fig. 3 is a perspective view of the connection between porous layer and supporting body.

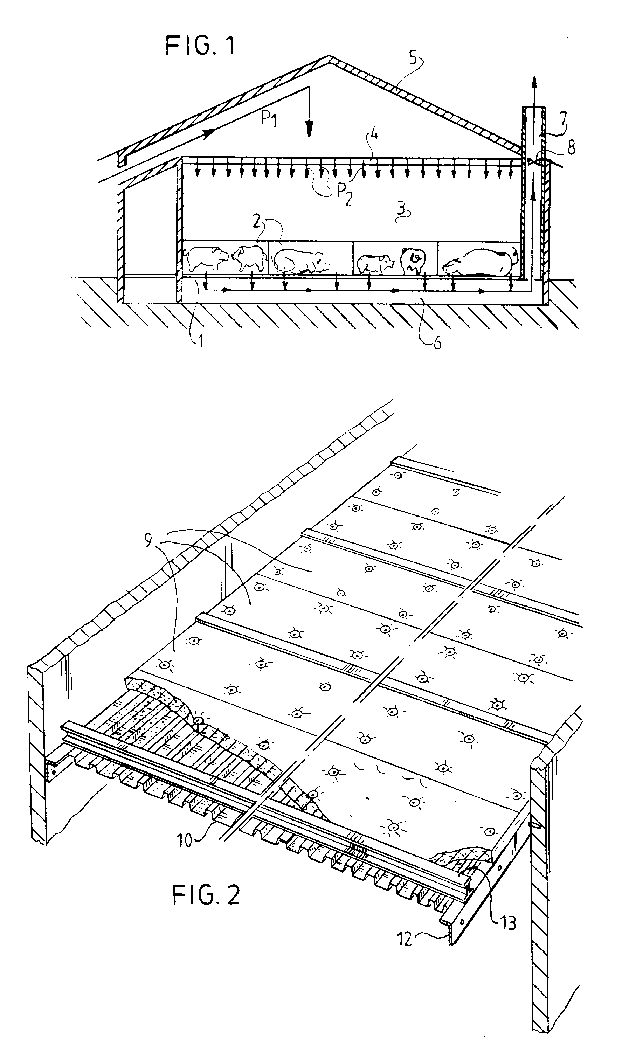

The shed shown in fig. 1 consists of a floor part 1 on which are arranged pens 2 for the livestock, in this case pigs.

The shed area 3 is closed off at the top by a ceiling 4 above which is fitted the roof 5. Fresh air enters the space above ceiling 4 in accordance with arrow P₁, subsequent to which it moves into the shed area 3 through the porous ceiling 4 which distributes the air uniformly as according to arrows P₂. Used air is drawn out of the shed by means of an exhaust system 7, 8 which communicates with the outside air.

As a consequence of the overpressure that may occur in the space under the roof 5 and above ceiling 4, and the underpressure in the shed area 3, there will be a pressure difference prevailing over the ceiling 4 which the ceiling parts must withstand.

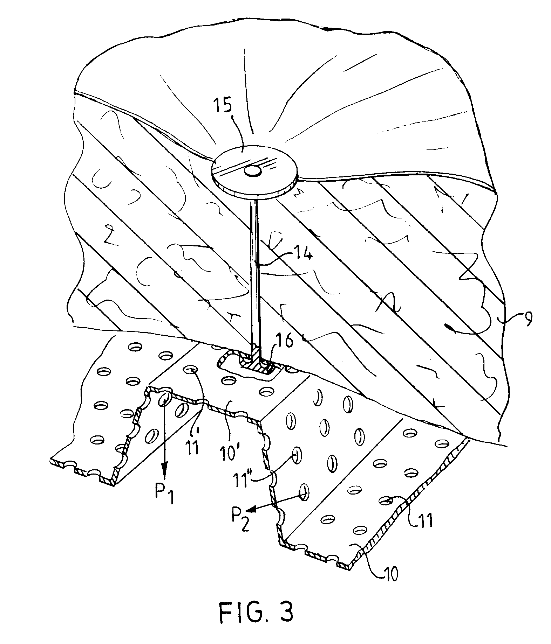

An embodiment of such a ceiling is shown in fig. 2 and 3. Herein can be seen that the porous layer, preferably in the form of rockwool tiles 9, is supported by a supporting body 10 that has a wave-like cross section. This supporting body can be built up from a number of strips of one or more corrugated profiles, whereby it is remarked that the profile is provided with a regular pattern of apertures 11 in order to form a perforated, air permeable body.

The supporting body 10 is supported on either side by support beams 12 which are fitted along the walls of the shed, whereby placed if necessary onto these beams 12 are supporting cross beams 13 against which the supporting body 10 can be fastened.

The attachment of a supporting body 10 may be carried out in any random manner, for instance also by means of tension rods.

The tiles 9 are fastened to the supporting body 10 by means of anchoring pins 14, this pin 14 being provided with a head 15 with an enlarged surface on the top side which supports against the top layer of the rockwool tile. The pin 14 is formed on the underside with barbs 16 with which an anchoring can be effected in simple manner by placing the pin 14 from above through the tile into an aperture 11 and pushing it through further such that the hooks 16 remain hooked against the underside of supporting body 10. Using such an attachment not only can a tile be rapidly fitted, but the tiles can also be pressed firmly against one another, thus creating a uniform porous layer.

The action of the ceiling construction as described above is as follows. Since the air flow through the porous layer takes place downward from above, the portion 10′ of the supporting body will allow direct passage of the air via the apertures 11′ present there, see fig. 3. This results in a downward directed flow vector P₁. The air in the chambers formed in the cavity beneath tile 9 and above supporting body 10 will flow away partly directly through the apertures 11 on the underside and partly via the apertures 11′, this resulting in another flow vector P₂ directed transversely of the vector P₁. These two flow directions cause an intensive mixing directly below the ceiling construction, which brings about a uniform temperature under the ceiling and therefore in the whole shed area.

The invention is not restricted to the above described embodiment.

## Claims

1. Ceiling (4) for livestock sheds and the like, comprising a porous layer (9) as a division between an air supply space and the shed area (3) to bring about climate control by means of air ventilation, said porous layer being supported by a supporting structure (10) comprising a plate (10) with a wave-like cross section perforated about its lower portion, the porous layer being in contact with the upper portions of said plate forming air chambers, characterized in that the plate comprises upper and lower straight portions, and intermediate straight portions linking said upper and lower horizontal portions, and that perforations (11) are provided in the intermediate portions and in the upper horizontal portions of the plate (10).

2. Ceiling as claimed in claim 1, **characterized in that** the porous layer (9) is a rockwool tile.

3. Ceiling as claimed in claim 1 or 2, **characterized in that** an anchoring member (14) extends through said porous layer or each tile and each perforated profiled beam or plate.

## Patentansprüche

1. Decke (4) für Viehställe und dergleichen, mit einer porösen Schicht (9) als Unterteilung zwischen einem Luftzufuhrraum und dem Stallbereich (3) zur Erzielung einer Klimasteuerung mit Hilfe einer Luftventilation, wobei die poröse Schicht von einer Halterungsstruktur (11) gehaltert ist, die eine Platte (10) mit einem wellenförmigen Querschnitt umfaßt, die entlang ihres unteren Abschnittes perforiert ist, wobei die poröse Schicht mit den oberen Abschnitten der Platte unter Bildung von Luftkammern in Verbindung steht, dadurch gekennzeichnet, daß die Platte obere und untere gerade horizontale Abschnitte und dazwischenliegende gerade Abschnitte aufweist, die die oberen und unteren horizontalen Abschnitte miteinander verbinden, und daß Perforationen (11) in den Zwischenabschnitten und den oberen horizontalen Abschnitten der Platte (10) ausgebildet sind.

2. Decke nach Anspruch 1, dadurch gekennzeichnet, daß die poröse Schicht (9) eine Steinwolleplatte ist.

3. Decke nach Anspruch 1 oder 2, dadurch gekennzeicnet, daß sich ein Verankerungsteil (14) durch die poröse Schicht oder jede Platte und jeden perforierten profilierten Träger oder die perforierte Platte erstreckt.

## Revendications

1. Plafond (4) pour bâtiment d'élevage et analogue, comportant une couche poreuse (9) en tant que séparation entre un espace d'alimentation en air et la zone (3) formant bâtiment pour constituer une commande de climatisation par l'intermédiaire d'une ventilation d'air, ladite couche poreuse étant supportée par une structure (10) de support comprenant une plaque (10) ayant une section transversale en forme d'onde perforée au niveau de sa partie inférieure, la couche poreuse étant en contact avec les parties supérieures de ladite plaque et formant des chambres d'air, caractérisé en ce que la plaque est constituée de parties rectilignes horizontales supérieures et inférieures, et des parties rectilignes intermédiaires reliant lesdites parties horizontales supérieures et inférieures, et en ce que des perforations (11) sont prévues dans les parties intermédiaires et dans les parties horizontales supérieures de la plaque (10).

2. Plafond selon la revendication 1, caractérisé en ce que la couche poreuse (9) est constituée de dalles de laine de roche.

3. Plafond selon la revendication 1 ou 2, caractérisé en ce qu'un élément d'ancrage (14) s'étend à travers ladite couche poreuse ou à travers chaque dalle et à travers chaque plaque ou poutre profilée perforée.
